# EUROPEAN PATENT APPLICATION

(11) **EP 0 853 986 A1**
(43) Date of publication of application: **22.07.1998**
(21) Application number: 97870004.5
(22) Date of filing: 21.01.1997
(51) Int. Cl.: B09C 1/02, C02F 1/62, C22B 3/00

(54) **Separation of heavy metals and materials for use in this**

(71) Applicant: THE PROCTER & GAMBLE COMPANY, Cincinnati, Ohio 45202 (US)
(72) Inventor: Schowanek, Diederik Rudolf, 9070 Heusden-Destelbergen (BE); Feijtel, Tom Cornelis Jan, 1435 Hevillers (BE)
(74) Representative: Peet, Jillian Wendy

(57) **Abstract**

The present invention concerns a method for separating heavy metals from contaminated substrates with compositions comprising [S,S]-EDDS.

## Description

### Field of the Invention

This invention relates to processes and materials for separating heavy metals from substrates such as contaminated soil, sludges, sediments, and industrial residues. In particular it relates to such processes wherein the heavy metal can be recovered for industrial use or can be disposed of separately from the substrate. Additionally, the invention relates to such processes wherein conduct of the process can reduce environmental and other pollution problems due to heavy metal loading without an associated increase or shift in environmental problems due to some other contaminant. The invention also relates to processes and materials particularly suitable for metal recovery.

### Background to the Invention

If an aqueous solution containing a chelating agent is exposed to an environment (e.g., a waste material) containing a compound of one or more metals which can be chelated by that chelating agent, some or all of the metals will form a chelate with that chelating agent. A wide variety of chelating agents are known, for instance as reviewed by Chen et al at pages 1185 to 1197 of Can.J.Civ.Eng.Vol 22, 1995. The equilibrium complexation constants for the various chelating agents with the various metals indicates the relative affinity and stability of any particular chelate and, when there is competition between metals, which metals will be chelated in preference to others.

It is known that some chelating agents will preferentially chelate divalent metals such as calcium, magnesium and ferrous iron and are sometimes referred to as hardness complexing agents, while other chelating agents have a particular tendency to form a chelate with heavy metals such as copper, lead, cadmium, zinc, nickel or mercury.

As shown in the article by Chen, there is an extremely large number of chelating agents out of which a selection could be made, but in practice interest has concentrated on relatively few. For example citric acid and NTA are commonly used as hardness complexing agents and EDTA is usually the material of choice for chelating heavy metals. Amongst a wide variety of other chelating agents that are discussed in the literature are various phosphates, phosphonates and various imino acids.

Contamination of soils, sediments and municipal or industrial wastes by heavy metal pollutants is a major environmental problem. For instance there are areas of ground which are contaminated by industrial waste containing heavy metal such that there is a risk of the heavy metal getting into ground water, and there are large volumes of river and sea sediments which are contaminated with toxic heavy metals.

Some major engineering works have been conducted and are being proposed which are designed to treat the top soil or ground water, or the sediments or other municipal or industrial wastes in such a way as to reduce the heavy metal contamination, but they all suffer from an inherent problem. This problem arises from the fact that chelants (or other chemical reagents) that may be used for attempting to remove the heavy metal contamination from the soil tend to be relatively ineffective unless they form a very strong chelate with the relevant metal. If they do form a strong chelate, then the result of the process is merely to transfer the environmental problem from a contaminated substrate (which is often solid and reasonably concentrated) to a vast volume of a dilute solution of a stable chelate of the heavy metal.

For example, the article by Chen et al reports the screening of 190 chelating agents (including all those mentioned above) and examines in particular the performance of ADA (acetamido imino diacetic acid), SCMC (amino carboxyalkyl thio proponoic acid) and PDA (pyridine dicarboxylic acid) but does not make any clear recommendations.

Other authors have concentrated on the use of EDTA and have noted its power for extracting heavy metals but have also noted the difficulty of recovering the heavy metal and recycling the EDTA (for instance Jardine et al in Geoderma 67 (1995) 125 to 140 and Martin et al Chem Tech April 1996 pages 23 to 25).

Other authors have concentrated on other ways of treating polluted sediments or ground waters from polluted soil and some of these processes have involved a biological treatment. However the same general problem remains, namely that either removal of the heavy metal is inefficient or the pollution problem is transferred from the soil or sediment in favour of a vast volume of dilute contaminated solution.

Further, the use of EDTA and other preferred chelating agents has the risk of the chelating agent subsequently causing further contamination of the environment, since they persist in the environment.

### Object of the Invention

An object of the invention is to provide processes and materials for enabling the efficient extraction of heavy metal from a substrate without associated further contamination due to the introduction of an environmentally persistent chelating agent. A further object of the invention is to provide processes and materials for separating heavy metals from a substrate under conditions so as to provide a heavy metal concentrate which has a sufficiently high concentration that either it can be used economically as a source of heavy metal or has relatively low volume such that storage or dumping in a controlled environment is economically and environmentally convenient.

### Summary of the Invention

The invention provides a process for separating heavy metal from a water-immiscible substrate, wherein the process comprises extracting the metal from the substrate by contacting the substrate with an aqueous treatment solution containing active [S,S]-EDDS and thereby forming an extract solution of heavy metal chelate, separating the extract solution from the substrate, and then separating the heavy metal from the extract solution.

EDDS is ethylene diamine disuccinic acid or ethylene di-imine butane dioic acid. It can exist in various isomeric forms. The form which must be used in the invention is the [S,S] form.

By "active" [S,S]-EDDS we mean [S,S]-EDDS in the form of the ion, the free acid or the alkali metal salt or other chemical form such that it is capable of acting as a chelating agent for heavy metals.

The invention also includes materials suitable for use in such a process. Included amongst these materials is a composition comprising active [S,S]-EDDS and one or more materials selected from (1) microorganisms or enzymes for promoting release of heavy metal from the substrate, (2) biodegradable surfactant for promoting release of heavy metal from the substrate and/or emulsifying hydrophobic material from the substrate into the aqueous treatment solution, (3) biodegradable hardness chelating agent for preferentially chelating calcium and/or magnesium and/or ferrous metal from the substrate, (4) flotation, coagulation or flocculation agent, and (5) acid, base or buffer for altering or controlling the pH of the substrate to a working optimum range.

### Description of the Preferred Embodiments

The [S,S]-EDDS is a powerful chelating agent for heavy metals and is readily biodegradable. For instance it is rapidly and substantially completely degraded in a suitable environment within 28 days, and usually within 14 days or less in a batch test. The [S,R] and [R,R] isomers are not readily biodegradable according to EU and OECD regulations.

Our current investigations into [S,S]-EDDS suggest that it is unique amongst all known chelating agents for its combination of chelating activity with respect of heavy metals and its biodegradability. The heavy metals are usually one or more of Cu, Cd, Hg, Zn, Pb, Ni and Cr.

EDDS is included in the list of chelating agents in the article by Chen. The use of EDDS compounds as allegedly biodegradable chelating agents, and the existence of various isomers, and their synthesis, has been well known in the literature for many years, see for instance CAS abstract 65:11738F of 1966, CAS abstract 91(5):38875F of 1978, U.S. 3,158,635 and EP 267,653, with the production of [S,S]-ELDS being specifically described by Neal and Rose, Inorganic Chemistry, Volume 7, 1968, pages 2405 to 2412 "Stereospecific Oligins and their Complexes of EDDS".

The [R,R] and [R,S]/[S,R] isomers are significantly less biodegradable than the [S,S] isomer and so preferably the EDDS used in the invention consists mainly or essentially only of [S,S]-EDDS. Generally therefore at least 80% by weight and preferably at least 95% by weight of total EDDS is in the [S,S]-EDDS form. Preferably the proportion of [S,S] isomer is as high as is reasonably practicably obtained by whatever synthetic method is being used (such as the method in Neal and Rose) and is preferably as close to 100% as is conveniently attainable. Usually it is 100%.

If any other chelating agents are used in combination with the [S,S]-EDDS it is preferred that they should be biodegradable with the result that the amount of non-biodegradable chelating agent used in the processes of the invention is kept to a minimum, and is preferably less than 50%, and most preferably less than 20 or 10% by weight based on total chelating agent and preferably is zero or as near zero as is conveniently possible.

As a result of using a highly biodegradable chelating agent, namely [S,S]-EDDS, the process of the invention has the advantage that any of the chelating agent which escapes into the environment is biodegraded within a reasonably short time. Accordingly the process of the invention (unlike processes using materials such as EDTA) does not have the effect of introducing a long-term and undesirable pollutant into the environment.

The separation of the extract solution from the substrate can be conducted by known methods which are applicable when the chelating agent is some other material (such as EDTA) in place of the [S,S]-EDDS, such as the separation and recovery techniques proposed in the literature.

Preferably, however, the separation of the heavy metal from the extract solution (i.e., the solution which is obtained by treating the substrate with the [S,S]-EDDS -containing treatment solution) is conducted by a process which comprises biodegrading the [S,S]-EDDS moieties of the heavy metal chelate in the extract solution and thereby releasing the heavy metal from the chelate, and separating the released heavy metal from the extract solution (usually by precipitation).

Thus, the invention offers the additional advantage that the step of biodegradation can be used to degrade substantially all the chelating moieties within a reasonably short time (and often very rapidly), thereby releasing the heavy metal from the chelate. The release of the heavy metal from the chelate then permits convenient and controlled separation of the released heavy metal from the extract solution.

The biodegradation is either conducted aerobically or anaerobically. The extract solution will usually contain sufficient nutrient for effective conduct of the biodegradation but if necessary additional carbon source or other nutrient can be added to promote bacterial growth and the biodegradation process.

The heavy metal which is released from the chelate in the extract solution during the biodegradation can be separated by ion exchange, electrolysis, or other techniques but preferably it is separated by precipitation.

The precipitation may follow as a result of the formation of any suitable insoluble compound of the heavy metal, but generally the most convenient heavy metal compound to be formed as precipitate is the metal sulphide. This is usually formed by bacterial reduction of elemental sulphur, sulphate or other oxidized sulphur sources. The conditions that prevail in an anaerobic digester will generally contain sufficient sulphide to cause spontaneous precipitation as heavy metal sulphide of the heavy metal which is released from the chelate by biodegradation. However additional sulphide, for instance bubbled through the anaerobic or aerobic digester as hydrogen sulphide, may be added to promote the desired precipitation. A sulphate may be added to generate sulphide in situ.

When the digestion is being conducted anaerobically, it is convenient to feed the extract solution containing the chelate, generally at a pH around 6 to 8, into an anaerobic digestion apparatus. Various designs of apparatus can be used. For instance the extract solution can be fed at the base of the reactor beneath a blanket of anaerobic sludge granules maintained at a temperature typically of 15 to 40°C. Additional nutrient, for instance in the form of waste water, can also be fed into the reactor with the extract solution. If necessary, the feed may also include inoculum for initiating the biodegradation. If a co-substrate is added during the digestion, methane is generated (and may be utilised as a source of heat or other energy in the process) and water and solids containing metal sulphides (or other separated metal) can be removed continuously or intermittently.

When the digestion is being conducted aerobically, it may be conducted in any suitable reactor such as in a mixed aerated tank at 7 to 30°C which contains an aqueous suspension of flocculated bacteria and into which the extract solution is pumped (i.e., an activated sludge system), or by a trickling filter through a sand or stone bed with bacteria on the solid particles, or by a fluidised bed reactor. The resultant solution, containing dissolved heavy metal compound, can then be passed through an ion exchanger to recover the heavy metal or can be subjected to precipitation, for instance under reduction with hydrogen sulphide, to form the sulphide precipitate. In any of these processes, the heavy metal can, alternatively, be recovered by electrolytic precipitation from the extract solution after biodegradation.

The heavy metal sulphide or other precipitate can then be recovered either as a relatively concentrated, for instance above 10% and often above 20 or even 50% dry weight aqueous suspension containing heavy metal compound and may, for instance, be recovered from the aqueous liquor by a liquid solids separation process such as filtration, sedimentation, or centrifugation, optionally followed by drying, and may thus be provided as a substantially dry cake or even a powder.

Accordingly, if the material is to be dumped (for instance indefinitely stored or dumped in land fill in containers) the process of the invention has the advantage that the heavy metal contamination is concentrated within a very small volume. However it is also possible to utilise the precipitated or otherwise separated heavy metal for an industrial process, for instance as a source of heavy metal for some industrial use. Thus, by the invention, it is possible to recover industrially useful heavy metal from a substrate and to reuse the recovered heavy metal.

The substrate must be water immiscible and insoluble in the sense that it is possible to extract the heavy metal from the substrate by contacting the substrate with the aqueous treatment solution whilst avoiding dissolution of most or all of the substrate into the treatment solution. Generally little or no dissolution of the substrate occurs into the treatment solution.

The substrate may be a water-immiscible liquid. For instance it may be oil contaminated with zinc or other heavy metal. Usually, however, the substrate is a solid or semi-solid material, for instance as a slurry.

The extraction step may be conducted in situ or ex situ, that is to say it may be conducted where the substrate is initially located (in situ) or in a mixing apparatus into which the substrate is transferred (ex situ).

Preferred in situ contact processes comprise percolating the treatment solution through a bed of the substrate and collecting the extract solution from the bed. The percolation may be conducted under gravity or may be forced by pumping the solution through the bed, for instance substantially horizontally.

Such processes are of particular value for treating contaminated soil since the treatment solution can be drained down through a permeable layer of the contaminated soil to collectors beneath the soil or can be pumped across a permeable layer of the soil, for instance from injection points immersed in the soil to collectors immersed in the soil at a lateral distance from the injection points.

The invention is also of use when a stack has been formed of contaminated substrate in which event this stack can, for instance, be sprayed with the treatment solution and the extract solution can be drained off from the bottom of the stack. Examples include the recovery of heavy metal from stacks of municipal or industrial waste such as organic or inorganic discharges, and stacks of waste water sludge or other composting material. Thus, by the invention, it is possible to recover valuable metals from waste ore dumps (or other mineral processing or mining wastes) and it is possible to remove the heavy metal pollution of composting material such as municipal waste or agricultural waste.

Ex situ processes of the invention are generally conducted by mixing the treatment solution with the substrate in a mixing or scrubbing reactor or other apparatus. It is necessary for there to be sufficient duration of contact, having regard to the volume and time available, between the treatment solution and the substrate to achieve sufficient extraction of heavy metal from the substrate prior to final separation of the extract solution from the substrate. If there is insufficient extraction of heavy metal in a single pass, the process conveniently can be conducted with the extract solution being separated from the substrate and then recycled within or into the mixing apparatus as treatment solution for the next pass, and with the separation and recycling being conducted as many times as is required. Typically it may be recycled five to ten times or more.

When the substrate is a water-immiscible liquid, separation of the extract solution (either during each recycle or at the end of the final pass) may be by any convenient technique. It can be assisted by flotation but is generally a liquid phase sedimentation process.

When the substrate is a solid, it is normally a particulate solid which can conveniently be mixed with the treatment solution in the mixing apparatus which can be rotating drum or a stirred tank or scrubber system containing mixers such as paddles. The mixing apparatus may thus be, for instance, a simple tank provided with paddles or it may be a more complex arrangement of continuous flow mixers or a counter-current unit. The separation of the extract solution, either after each pass or after the final or only passage through the apparatus, can be by any convenient solids liquid dewatering or separation process such as filtration, sedimentation, centrifugation or flotation.

The ex situ processes of the invention are of particular value when applied to particulate solid materials such as industrially contaminated soil, river or harbour sediment, waste from a mineral mining or processing plant, cellulosic waste solids (for instance sludge or cake from mill waste or a deinking plant), industrial waste sludge solids and municipal sewage sludge solids. The various sludge solids may be supplied to the process of the invention as a slurry or, for instance, more than 2% and often more than 10%, but usually less than 50%, solids in water or they may be supplied as a cake or even a relatively dry material.

In one useful process according to the invention, the invention is combined with the production of industrial or municipal waste water sludge by, before dewatering the sludge, treating it with the [S,S]-EDDS treatment solution, dewatering the treated sludge in conventional manner, and subjecting the extract solution to anaerobic or aerobic digestion (for instance in a digester of similar design to other anaerobic digesters in the sewage treatment plant) with accompanying separation of heavy metal sulphide precipitate.

In another process of the invention metal-contaminated soil, or river or harbour sediment is subjected to the extraction treatment of the invention. Depending on the composition of the contaminated substrate and the nature of the pollution, the substrate may first be separated in fractions to facilitate the process, after which all or only some of the fractions are treated further. In particular, when the starting material is a mixture of sand with clay or silt, hydrocyclon treatment or other process for separating the sand from the clay or silt will tend to leave a sand fraction having low heavy metal contamination and the silt or clay fraction having higher contamination. This fraction can then be subjected to the process of the invention.

In other processes of the invention part or all of the substrate may initially be in a suspended form in which event it is desirable to bring it out of suspension as a coagulate or flocculate by treating the suspension with a coagulant or flocculant, thereby coagulating or flocculating the suspended material so as to form the substrate which can then be treated with the treatment solution in accordance with the invention.

In order to optimise the release of heavy metal compounds from the substrate into the treatment solution during the extraction process (either in situ or ex situ), it is desirable to include materials which will promote the availability of the heavy metal compounds to the treatment solution. For instance acid may be added to solubilise heavy metal base, or salts.

Enzymes, or microorganisms which will generate enzymes, which promote the release of heavy metal compounds from the organic fraction of the substrate can be included in the treatment solution. For instance microorganisms or enzymes which will degrade humic or fatty acid, cellulosic, carbohydrate or other materials which will tend to hold the heavy metal compounds to the substrate may be incorporated in the solution. For instance it is possible to use cellulase, lipase or amylase for this purpose. Suitable amounts are 10 to 500mg (usually as prilled material) per kg substrate.

Surfactant can be included for the purpose of improving contact between the substrate and the treatment solution and/or for emulsifying emulsifiable residues which would otherwise tend to repel the treatment solution from the substrate or prevent or minimise wetting of the substrate by the treatment solution. Also, when the substrate is a water-immiscible liquid, an emulsifier may be used to promote emulsification of the immiscible liquid into water provided that it is possible subsequently to break the emulsion and separate the extract solution from the water-immiscible liquid.

In order to avoid additional loading of the environment by adding surfactant to the substrate, it is preferable that the surfactants should be rapidly and substantially completely biodegradable, by which we mean they should be biodegradable either under substantially the same conditions as are used for biodegrading the [S,S]-EDDS or such that they will biodegrade at a reasonable rate when the effluent from the process reaches the river or other final environment. Preferably the surfactant biodegrades at least 80% (and preferably 100% or close to 100%) under the conditions that result in substantially complete biodegradation of the [S,S]-EDDS during the process of the invention. The surfactant (or surfactant mixture) may be selected from materials that will sorb on to the substrate only to a very low extent.

Suitable anionic surfactants for use in the invention include alkyl (usually C₁₀₋₁₄) sulphates and ethoxylated alkyl sulphates (both of which are generally readily biodegradable anaerobically or aerobically) and linear alkyl benzene sulphonate when the biodegradation is aerobic and secondary alkane sulphonates.

The use of ethoxylated alkyl sulphates, especially C₁₀₋₁₄ alkyl with 1 to 4 ethoxy groups, is particularly preferred.

Suitable non-ionic surfactants which can be used in the invention are ethoxylated fatty alcohols (especially C₁₀₋₁₄ alkyl with 7-15 ethoxy groups), glucamides, and alkyl polyglycosides.

Other suitable surfactants which can be used in the invention include cationics.

Some or all of the surfactants may be produced biologically, e.g., as in Applied and Environmental Microbiology, Oct 1992, p 3276 to 3282 and Water Environment Research, Volume 64 No.2, March/April 1992, p 163 to 169.

The total amount of surfactant which is included in the treatment solution is generally from 10 to 1000mg/l, or 100mg to 10g per kg substrate. The amount should be above the CMC.

In order that the [S,S]-EDDS is utilised primarily for chelating the environmentally troublesome heavy metals such as copper, cadmium, mercury, zinc and lead, it is often preferred to include also in the treatment solution a hardness complexing agent, which is preferably biodegradable, that is to say a chelant which is preferably substantially biodegradable under the same conditions as the [S,S]-EDDS (or after discharge) and which will preferentially chelate calcium and/or magnesium and/or ferrous iron. Typical hardness complexing agents include citric acid, fatty acids and NTA. Zeolite and phosphate can also be used. The amount may be 100mg to 20g/kg substrate.

Other materials which may be included comprise materials to facilitate subsequent separation of the substrate from the extract solution, such as flotation aids (when the separation is by flotation) or inorganic or polymeric coagulants when it is by coagulation or polymeric flocculants when it is by flocculation.

Preferred compositions for use in the invention are single pack compositions which contain [S,S]-EDDS and one or more of (a) microorganisms or enzymes for promoting release of heavy metal, (b) biodegradable surfactant, (c) hardness complexing agent, (d) flotation or coagulant or flocculation aid, and (e) acid, base or buffer. The compositions may be in the form of solids but are often liquids. Typically they contain 10-60% (often 10-30%) [S,S]-EDDS, 0-25% (often 5-15%) surfactant system which typically contains AES optionally with AE and/or AS, 5-40% (often 5-20%) hardness complexing agent, 0.2-5% (often 0.5-2%) enzyme, 0-20% other processing aids, balance water (all percentages being by weight).

The following is an example of the invention.

### Example

A Belgian metal-polluted river sediment was pretreated via sieving and hydrocyclone treatment to separate the fraction >55µm. This sandy fraction was further decontaminated, with focus on the removal of heavy metals (several types of organic pollutants were equally present).

The treatment was executed in a scrubbing unit with slurry concentration of ca. 250g dry matter per litre water with acidification and chelator treatment at 20°C. First, the pH of the suspension was lowered from 6.7 to 5.0, in combination with the dosage of [S,S]-EDDS (5.5g/l) together with citrate (1g/l) and non-ionic surfactant (A12EO9, 100mg/l). The mixture was allowed to equilibrate for 8h under continuous stirring, after which the pH was lowered further to 2.5 with sulfuric acid, and another 4 hours of contact time was allowed. Subsequently, the sediment was filtered and washed twice with demineralised water (100ml/250g slurry). The extraction efficiency of this treatment is shown in Table 1 for the different metals. The acidic metal-containing effluent was neutralised with NaOH to pH 6.5 prior to biological metal-recovery.

**Table 1**

| Results of the treatment of the sandy fraction (>55µm) of a river sediment. | | | |
|---|---|---|---|
| Metal | Level before cleaning (mg/kg DM) | Level after cleaning (mg/kg DM) | Removal (%) |
| As | 12 | 9.6 | 20 |
| Cd | 6 | 0.24 | 96 |
| Cu | 218 | 100 | 54 |
| Cr(III) | 85 | 75 | 12 |
| Hg | 6 | 5.76 | 4 |
| Ni | 89 | 54 | 39 |
| Pb | 206 | 43 | 79 |
| Zn | 528 | 93 | 88 |

In one approach, recovery of the metals from the [S,S]-EDDS complex took place in an (aerobic) airlift labscale reactor (51) which contained 5g/l of activated sludge that had been acclimated to [S,S]-EDDS (100mg/l) in domestic waste water for 6 weeks (20°C). The metal-containing extract was passed (undiluted) through this reactor with a hydraulic residence time (i.e., average contact time) of 8 hours. The effluent was collected and treated with 400mg sulfide/l in order to precipitate the metals present in solution. A removal >90% was achieved for all metals with this system.

## Claims

1. A process for separating heavy metal from a immiscible substrate comprising extracting the metal from the substrate by contacting the substrate with an aqueous treatment solution containing active [S,S]-EDDS and thereby forming an extract solution of heavy metal chelate, separating the extract solution from the substrate, and then separating the heavy metal from the extract solution.

2. A process according to claim 1 in which the separation of the heavy metal from the extract solution comprises biodegrading the [S,S]-EDDS moieties of the heavy metal chelate in the extract solution and thereby releasing the heavy metal from the chelate, and separating the released heavy metal from the extract solution.

3. A process according to claim 2 in which the biodegradation is by anaerobic biodegradation.

4. A process according to claim 2 or claim 3 in which the released heavy metal is precipitated from the extract solution.

5. A process according to claim 4 in which the released heavy metal is precipitated as metal sulphide.

6. A process according to any preceding claim in which the separated heavy metal is reused.

7. A process according to any of claims 1 to 5 in which the separated heavy metal is dumped.

8. A process according to any preceding claim wherein the contact with the substrate and the separation of the extract solution from the substrate is conducted by percolating the treatment solution through a bed of the substrate and collecting the extract solution from the bed.

9. A process according to claim 8 in which the bed is an in situ permeable layer of contaminated soil, a permeable stack of substrate, or a permeable layer of substrate.

10. A process according to any of claims 1 to 7 in which the contact of the substrate with the treatment solution is conducted by mixing the treatment solution with the substrate in a mixing apparatus.

11. A process according to claim 10 in which the extract solution is separated from the substrate and is recycled within or into the mixing apparatus as treatment solution.

12. A process according to claim 10 or claim 11 in which the substrate is a water immiscible liquid.

13. A process according to claim 12 in which the substrate is oil contaminated with heavy metal.

14. A process according to claim 12 or claim 13 in which the extract solution is separated from the substrate by liquid phase sedimentation or flotation.

15. A process according to claim 10 or claim 11 in which the substrate is solid.

16. A process according to claim 15 in which the extract solution is separated from the solid by a solids liquid dewatering process selected from filtration, sedimentation, centrifugation and flotation.

17. A process according to claim 15 or claim 16 in which the solid substrate is selected from industrially contaminated soil, river or harbour sediment, waste from a mineral recovery plant, cellulosic waste solids, industrial waste sludge solids, and municipal sewage sludge solids.

18. A process according to any of claims 15 to 17 in which the substrate which is extracted with the treatment solution is clay or silt which has been separated from sand in a sediment by flotation.

19. A process according to any of claims 15 to 17 in which the substrate which is extracted with the treatment solution comprises particulate material formed by coagulation or flocculation of suspended material in an aqueous liquor.

20. A process according to any preceding claim in which the aqueous treatment liquor includes at least one material selected from:
- microorganisms or enzymes for promoting release of heavy metal from the substrate,
- biodegradable surfactant for promoting release of heavy metal from the substrate and/or for emulsifying hydrophobic material from the substrate into the aqueous solution,
- biodegradable hardness complexing agent for preferentially chelating calcium and/or magnesium and/or ferrous, flotation, coagulation and/or flocculation agent, and,
- acid, base or buffer.

21. A process according to claim 20 in which the aqueous treatment liquor includes surfactant most or all of which is biodegradable and wherein it includes ethoxylated alkyl sulphate.

22. A composition for dilution in water to form an aqueous treatment solution for use in a process according to any preceding claim comprising [S,S]-EDDS and one or more materials selected from:
- microorganisms or enzymes for promoting release of heavy metal from the substrate,
- biodegradable surfactant for promoting release of heavy metal from the substrate and/or for emulsifying hydrophobic material from the substrate into the aqueous solution,
- biodegradable chelating builder for preferentially chelating calcium and/or magnesium and/or ferrous,
- flotation, coagulation and/or flocculation agent, and,
- acid, base or buffer.

23. A composition according to claim 22 in which the composition includes surfactant most or all of which is biodegradable and which includes biodegradable ethoxylated alkyl sulphate.
